Europäisches Patentamt

European Patent Office

Office européen des brevets

(19)

(11) Veröffentlichungsnummer: **0 274 660**
**B1**

(12) **EUROPÄISCHE PATENTSCHRIFT**

(45) Veröffentlichungstag der Patentschrift: **16.01.91**

(51) Int. Cl.⁵: **F 16 K 31/42**

(21) Anmeldenummer: **87118070.9**

(22) Anmeldetag: **07.12.87**

(54) **Wegeventil.**

(30) Priorität: **14.01.87 DE 3700899**

(43) Veröffentlichungstag der Anmeldung:
**20.07.88 Patentblatt 88/29**

(45) Bekanntmachung des Hinweises auf die
Patenterteilung:
**16.01.91 Patentblatt 91/03**

(84) Benannte Vertragsstaaten:
**DE FR GB IT SE**

(56) Entgegenhaltungen:
**DE-A-2 253 462**
**DE-B-1 204 477**
**DE-B-1 247 786**
**DE-U-7 129 388**
**US-A-2 496 036**

(73) Patentinhaber: **Herion-Werke KG**
**Stuttgarter Strasse 120**
**D-7012 Fellbach (DE)**

(72) Erfinder: **Ott, Helmut**
**Kapellenweg 21**
**D-7000 Stuttgart 50 (DE)**

(74) Vertreter: **Leyh, Hans, Dr.-Ing. et al**
**Patentanwälte Berendt, Leyh & Hering Innere**
**Wiener Strasse 20**
**D-8000 München 80 (DE)**

Courier Press, Leamington Spa, England.

**Beschreibung**

Die Erfindung betrifft ein Wegeventil, insbesondere für elektropneumatische Ansteuerung, mit einem Gehäuse mit einem Zulaufanschluß, zwei Arbeitsanschlüssen und einem Entlüftungsanschluß, sowie einem Steuerkolben, wobei der eine Arbeitsanschluß direkt und der andere Arbeitsanschluß über Bohrungen im Steuerkolben mit dem Entlüftungsanschluß verbindbar ist, wobei der Steuerkolben im Bereich des einen Arbeitsanschlusses als Schieberventil ausgebildet ist.

Ein Ventil dieser Art ist bekannt aus dem US—A—2496036.

Bei diesem Ventil kann aber die Entlüftung der beiden Arbeitsanschlüsse nicht getrennt und unabhängig voneinander gedrosselt werden.

Der Erfindung liegt daher die Aufgabe zugrunde, ein Ventil der eingangs genannten Art so weiterzubilden, daß die Entlüftung der beiden Arbeitsanschlüsse separat drosselbar ist.

Nach der Erfindung wird dies dadurch erreicht, daß der Steuerkolben im Bereich des anderen Arbeitsanschlusses als Sitzventil ausgebildet ist, daß bei geöffnetem Sitzventil ein Teil seines Ventilquerschnittes durch einen Ansatz des Steuerkolbens geschlossen ist, während der restliche Teil des Ventilquerschnittes mittels einer drehbaren Drosselbüchse veränderbar ist, und daß durch die Drosselbüchse und eine Drosselschraube die stirnseitige Auslaßöffnung der Bohrung im Steuerkolben veränderbar ist.

Eine beispielsweise Ausführungsform der Erfindung wird nachfolgend anhand der Zeichnung erläutert, in der

Figur 1 im Schnitt ein Wegeventil in einer von zwei Schaltstellungen zeigt.

Figur 2 zeigt im Schnitt das Wegeventil nach Figur 1 in der anderen der beiden Schaltstellungen.

Fig. 3 und 4 zeigen einen Schnitt längs der Linie III, IV—III, IV von Fig. 1 in ungedrosselter bzw. in gedrosselter Stellung.

Fig. 5 und 6 zeigen einen Schnitt längs der Linie V, VI—V, VI, von Fig. 1 in ungedrosselter bzw. in gedrosselter Stellung.

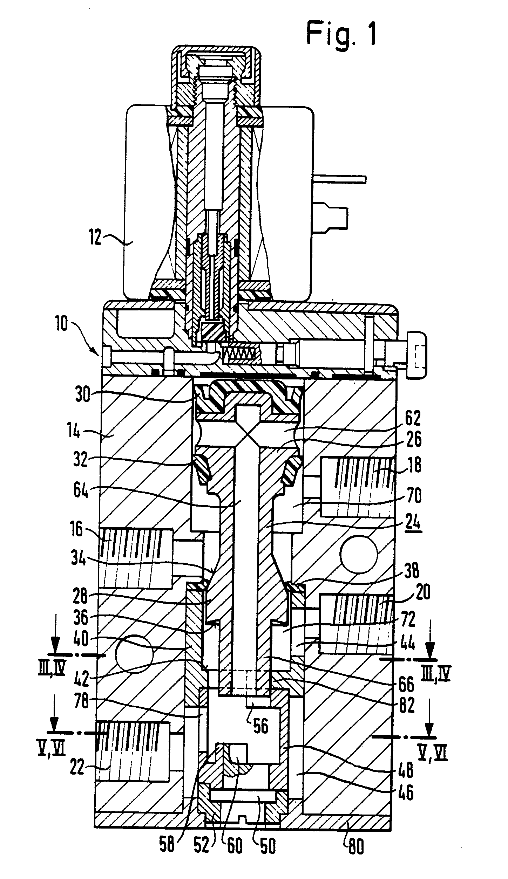

Fig. 1 zeigt im Schnitt ein Wegeventil 10, das mittels eines elektromagnetisch betätigbaren Vorsteuerventils 12 angesteuert wird. Das letztere ist nicht Gegenstand der Erfindung und wird daher im einzelnen nicht beschrieben.

Das Wegenventil 10 hat ein Gehäuse 14 mit einem Zulaufanschluß 16, zwei Arbeitsanschlüssen 18, 20 und einem für beide Arbeitsanschlüsse gemeinsamen Rücklaufanschluß 22.

In einer Längsbohrung des Gehäuses 14 ist ein Steuerkolben 24 axial verschiebbar angeordnet, der im Bereich des Arbeitsanschlusses 18 in Form eines Schieberventils 26 und im Bereich des Arbeitsanschlusses 20 in Form eines Sitzventils 28 ausgebildet ist. Der Steuerkolben 24 ist im Bereich des Schieberventils 26 mit einer Querbohrung 62 versehen und von dieser ausgehend erstreckt sich eine Längsbohrung 64 durch den gesamten Steuerkolben 24, die sich zum Rücklaufanschluß 22 hin öffnet.

Die Längsbohrung im Gehäuse für den Steuerkolben ist axial unterteilt in eine Kammer 70 für das Schieberventil 26 und eine Kammer 72 für das Sitzventil 28. Das Schieberventil 26 und die Kammer 70 haben einen größeren Durchmesser als das Sitzventil 28 und die Kammer 72.

Das Schieberventil 26 ist in Axialrichtung gesehen auf jeder Seite der Querbohrung 62 mit einer Dichtung 30 bzw. 32 versehen, die gegenüber der Wand der Kammer 70 abdichten.

Das Sitzventil 28 hat eine stirnseitige Dichtfläche 36, die mit einem an einer Ventilbüchse 40 ausgebildeten Ventilsitz 42 zusammenwirkt. Auf seiner dem Schieberventil 26 zugewandten Seite hat das Sitzventil 28 eine kegelige Dichtfläche 34, die mit einer zwischen dem Gehäuse 14 und der Ventilbüchse 40 gehaltenen Dichtung 38 zusammenwirkt.

Die Ventilbüchse 40 ist in geeigneter Weise axial und verdrehsicher im Gehäuse 14 gehalten. Sie ist auf der Seite des Arbeitsanschlusses 20 mit einer Querbohrung 44 versehen, über welche der Arbeitsanschluß 20 mit der Kammer 72 verbunden ist.

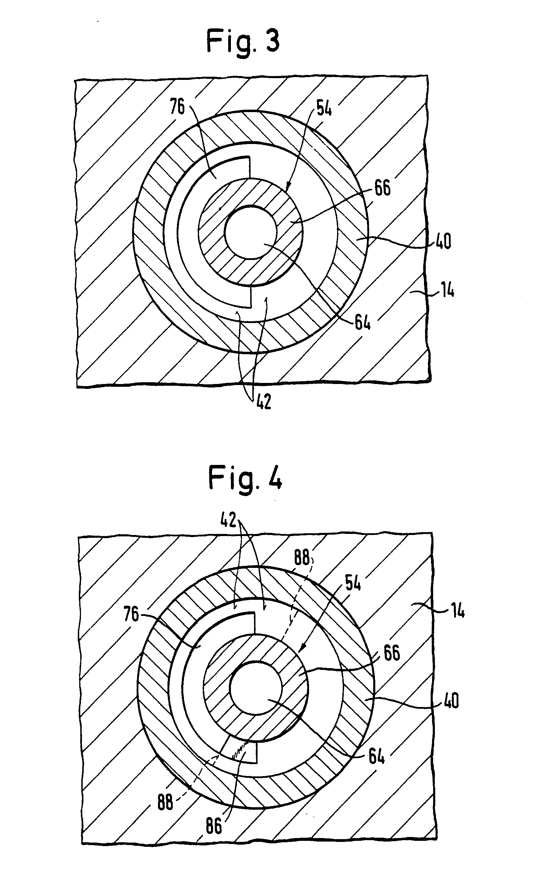

Im Gehäuse 14 ist ferner koaxial zur Ventilbüchse 40 eine Drosselbüchse 48 angeordnet, die mit ihrem dem Sitzventil 28 zugewandten Ende axial etwas in die Ventilbüchse 40 eingeschoben und dadurch geführt ist und die mit ihrer diesem Ende zugehörigen Stirnfläche stumpf an einer querverlaufenden Zwischenwand 82 der Ventilbüchse 40 anliegt, an bzw. in welcher Zwischenwand 82 der Ventilsitz 42 und der Ventilquerschnitt 54 (Fig. 3) ausgebildet sind.

Die Drosselbüchse 48 ist mit einer Querbohrung 78 versehen, über welche der Innenraum der Drosselbüchse 48 mit einem Ringraum 46 zwischen der letzteren und dem Gehäuse 14 verbunden ist, in welchen andererseits der Rücklaufanschluß 22 mündet.

In das andere Ende der Drosselbüchse 48 ist koaxial eine Drosselschraube 50 eingesetzt, die relativ zur Drosselbüchse 48 verdrehbar ist und Drosselschraube 50 und Drosselbüchse 48 sind durch einen Haltering 52 gehalten, der seinerseits durch einen Deckel 80 gehalten ist. Alternativ kann der Halterung 52 aber auch direkt in das Gehäuse 14, z.B. eingeschraubt sein.

Die Drosselbüchse 48 ist an ihrem ventilseitigen Ende mit einem hablringförmigen Bund 56 versehen, der es ermöglicht, wie noch beschrieben wird, den Ventilquerschnitt 54 des Ventilsitzes 42 mehr oder weniger zu drosseln.

Die Drosselbüchse 48 ist ferner an ihrem anderen Ende mit einem axial auf den Steuerkolben 24 zu gerichteten halbringförmigen Bund 58 versehen, der in der dargestellten Ausführungsform z.B. um 180° gegenüber dem halbringförmigen Bund 56 versetzt ist.

Die Drosselschraube 50 ist ebenfalls mit einem axial auf den Steuerkolben 24 zu gerichteten halbringförmigen Bund 60 versehen, der, wie bereits ausgeführt, relativ zu dem halbringförmigen Bund 58 der Drosselbüchse 48 verdrehbar ist.

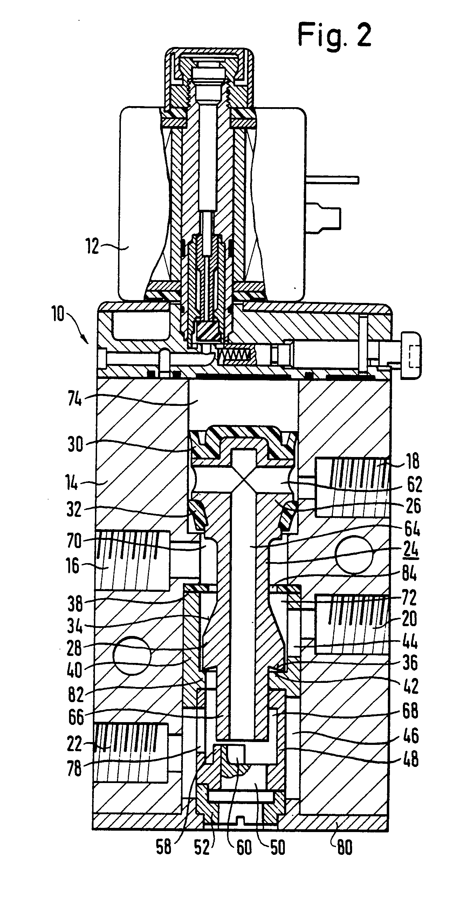

Der Steuerkolben 24 ist auf seiner dem Ventilsitz 42 zugewandten Seite mit einem zylindrischen Ansatz 66 versehen, der sich in jeder Position des Steuerkolbens 24 durch den Ventilquerschnitt 54 des Ventilsitzes 42 hindurch erstreckt, wie die Fig. 1 und 2 zeigen.

Zwischen dem zylindrischen Ansatz 66 und der Drosselbüchse 48 ist ein Ringraum 68 gebildet, wie insbesondere Fig. 2 zeigt.

Das erfindungsgemäße Wegeventil arbeitet wie folgt.

In der Schaltstellung nach Fig. 1 ist der Steuerkolben 24 über das Vorsteuerventil 12 entlüftet. Am Zulaufanschluß 16 steht der Zulaufdruck des Druckmittels, z.B. Luft, an. Da der Durchmesser des Schieberventiles 26 größer ist als derjenige des Sitzventiles 28, wird der Steuerkolben durch das Druckmittel in die in Fig. 1 gezeigte Position geschaltet, in der das Druckmittel vom Zulaufanschluß 16 her über die Kammer 70 zum Arbeitsanschluß 18 strömt. Der andere Arbeitsanschluß 20 ist über die Querbohrung 44, die Kammer 72, den Ventilsitz 42 bzw. dessen Ventilquerschnitt 54, den Innenraum der Drosselbüchse 48, die Querbohrung 78 und den Ringraum 46 zum Rücklaufanschluß 22 entlüftet.

Die Verbindung zwischen der Kammer 70 und der Kammer 72 ist durch die Dichtung 38 gesperrt und die Verbindung von der Kammer 70 zur Querbohrung 62 ist durch die Dichtung 32 gesperrt.

Wird der Steuerkolben 24 bei Umschaltung des Vorsteuerventils 12 mit Druck beaufschlagt, so strömt das Druckmittel in die Arbeitskammer 74 (Fig. 2) ein, wodurch der Steuerkolben 24 in die in Fig. 2 gezeigte Position umgeschaltet wird.

In dieser Position strömt das Druckmittel vom Zulaufanschluß 16 her durch die Kammer 70, dann durch den nunmehr offenen Ventilquerschnitt 84 in die Kammer 72 und von dort durch die Querbohrung 44 zum Arbeitsanschluß 20. Der Weg vom Zulaufanschluß 16 zum Arbeitsanschluß 18 ist durch die Dichtung 32 gesperrt.

Der Arbeitsanschluß 18 ist über die Querbohrung 62 und die Längsbohrung 64 im Steuerkolben 24, ferner über den Innenraum der Drosselbüchse 48, die Querbohrung 78 und den Ringraum 46 zum Rücklaufanschluß 22 entlüftet.

Der Entlüftungsquerschnitt beider Arbeitsanschlüsse 18 und 20 kann, wie oben bereits erwähnt, separat und unabhängig voneinander gedrosselt werden.

Wie bereits ausgeführt, ist der Arbeitsanschluß 20 über den Ventilquerschnitt 54 des Sitzventils 28 entlüftet.

Der Ventilquerschnitt 54 besteht, wie Fig. 3 zeigt, aus der Kreisfläche, die der zylindrische Ansatz 66 des Steuerkolbens 24 einnimmt plus der halbringförmigen Fläche 76. Wenn das Sitzventil 28 geschlossen ist, sitzt seine Dichtfläche 36 auf dem in Fig. 3 dargestellten Ventilsitz 42 auf. Wenn aber, wie in Fig. 1 gezeigt, das Sitzventil 28 geöffnet ist, so ist ein Teil des Ventilquerschnitts 54 durch den Ansatz 66 des Steuerkolbens 24 abgedeckt oder geschlossen, die halbringförmige Fläche 76 steht aber zur Entlüftung des Arbeitsanschlusses 20 zur Verfügung.

In der Stellung nach Fig. 3 ist der Entlüftungsquerschnitt 76 nicht gedrosselt.

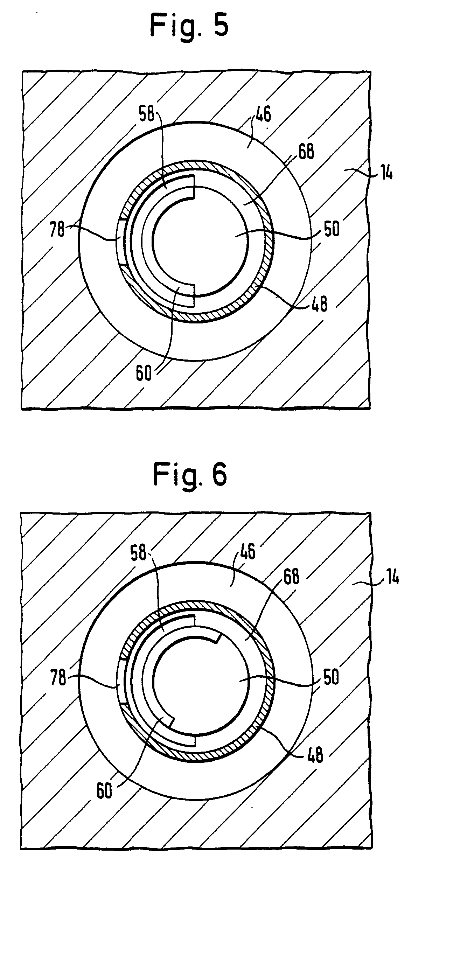

In der Stellung nach Fig. 4 ist jedoch die Drosselbüchse 48 relativ zur Ventilbüchse 40 verdreht worden, so daß ein Teil 86 der Ringfläche 76, die den Drosselquerschnitt darstellt, durch den hablbringförmigen Bund 56 der Drosselbüchse 48 abgedeckt wird, wobei die Position dieses halbringförmigen Bundes 56 der Drosselbüchse 48 in Fig. 4 durch die gestrichelte Linie 88 angegeben ist.

Durch Verdrehen der Drosselbüchse 48 läßt sich somit der Drosselquerschnitt für den Arbeitsanschluß 20 verändern und nach Wunsch einstellen.

In der Schaltstellung nach Fig. 2 ist das Sitzventil 28 geschlossen, der Arbeitsanschluß 20 ist an den Zulaufanschluß 16 angeschlossen, während der Arbeitsanschluß 18 über die Querbohrung 62 und die Längsbohrung 64 im Steuerkolben 24 entlüftet ist.

Die Längsbohrung 64 mündet, wie Fig. 2 zeigt, in den Innenraum der Drosselbüchse 48. In der in Fig. 5 gezeigten Position, die der Position nach Fig. 2 entspricht, ist der Entlüftungsquerschnitt nicht gedrosselt. Die Druckluft kann aus der Mündung der Längsbohrung 64 austreten und über den Ringraum 68 durch die Querbohrung 78 und den Ringraum 46 zum Entlüftungsanschluß 22 strömen. Wird hingegen die Drosselschraube 50 relativ zur Drosselbüchse 48 verdreht, wie in Fig. 6 dargestellt ist, so verdreht sich auch der halbringförmige Bund 60 der Drosselschraube 50 relativ zu dem halbringförmigen Bund 58 der Drosselbüchse 48, wie Fig. 6 zeigt. Die in Fig. 6 nicht dargestellte Mündung der Längsbohrung 64 wird dadurch in stärkerem Maße in Umfangsrichtung durch die beiden halbringförmigen Bunde 58 und 60 umschlossen, so daß der verbleibende Querschnitt, durch den das Druckmittel zum Ringraum 68 strömen kann, kleiner wird. (Würde der halbringförmige Bund 60 der Drosselschraube 50 um 180° relativ zum halbringförmigen Bund 58 der Drosselbüchse 48 verdreht, so wäre die Mündung der Längsbohrung 64 über den gesamten Umfang umschlossen und die Druckluft könnte vom Arbeitsanschluß 18, abgesehen von kleinen toleranzbedingten Spalten, nicht abströmen).

Durch eine Verdrehung des Bundes 60 der Drosselschraube 50 relativ zum Bund 58 der Drosselbüchse 48 läßt sich somit der Entlüftungsquerschnitt des Arbeitsanschlusses 18 mehr oder weniger stark verändern und damit drosseln.

Die Drosselschraube und die Drosselbüchse sind separat und unabhängig voneinander verdrehbar und in ihrer jeweiligen Stellung durch geeignete, nicht näher dargestellte Mittel, z.B. durch eine Riffelung oder Verzahnung an ihren Stirnflächen verrastbar.

In der dargestellten Ausführungsform werden die beiden Teile durch den Halterung 52 und den Deckel 80 axial gegeneinander und gegen die Ventilbüchse 40 angepreßt und durch Reibungseingriff gehalten.

## Patentansprüche

1. Wegeventil, insbesondere für elektropneumatische Ansteuerung, mit einem Gehäuse (14) mit einem Zulaufanschluß (16), zwei Arbeitsanschlüssen (18, 20) und einem Entlüftungsanschluß (22), sowie einem Steuerkolben (24), wobei der eine Arbeitsanschluß (20) direkt und der andere Arbeitsanschluß (18) über Bohrungen (62, 64) im Steuerkolben (24) mit dem Entlüftungsanschluß (22) verbindbar ist, wobei der Steuerkolben (24) im Bereich des einen Arbeitanschlusses (18) als Schieberventil (26) ausgebildet ist, dadurch gekennzeichnet daß der Steuerkolben (24) im Bereich des anderen Arbeitsanschlusses (20) als Sitzventil (28) ausgebildet ist, daß bei geöffnetem Sitzventil (28) ein Teil seines Ventilquerschnittes (54) durch einen Ansatz (66) des Steuerkolbens (24) geschlossen ist, während der restliche Teil (76) des Ventilquerschnittes (54) mittels einer drehbaren Drosselbüchse (48) veränderbar ist, und daß durch die Drosselbüchse (48) und eine Drosselschraube (50) die stirnseitige Auslaßöffnung der Bohrung (64) veränderbar ist.

2. Wegeventil nach Anspruch 1, dadurch gekennzeichnet, daß der eine Arbeitsanschluß (20) durch den Ventilsitz (42) des geöffneten Sitzventiles (28) hindurch entlüftbar ist.

3. Wegeventil nach Anspruch 1 oder 2, dadurch gekennzeichnet, daß der zylindrische Ansatz (66) des Steuerkolbens (24) sich ständig durch den Ventilsitz (42) des Sitzventiles (28) hindurch erstreckt.

4. Wegeventil nach Anspruch 1, dadurch gekennzeichnet, daß der restliche Teil (76) des Ventilquerschnitts (54) des Ventilsitzes (42) halbringförmig ausgebildet ist und daß die Drossel- büchse (48) einen entsprechenden halbringförmi- gen Bund (56) hat, durch den bei Drehung der Drosselbüchse (48) dieser halbringförmige Rest- querschnitt (76) des Ventilquerschnittes (54) überdeckbar und drosselbar ist.

5. Wegeventil nach Anspruch 1, dadurch gekennzeichnet, daß die Drosselbüchse (48) und die Drosselschraube (50) je einen axialen halbringförmigen Bund (58 bzw. 60) haben, und daß die Drosselschraube (50) relativ zur Drosselbüchse (48) verdrehbar ist, so daß die Auslaßöffnung der Längsbohrung (64) in Umfangsrichtung umschließbar und drosselbar ist.

6. Wegeventil nach Anspruch 5, dadurch gekennzeichnet, daß die Drosselschraube (50) zentrisch in der Drosselbüchse (48) gehalten ist und daß die beiden halbringförmigen Bunde (58, 60) der Auslaßöffnung der Längsbohrung (48) axial gegenüberliegen.

7. Wegeventil nach einem der vorhergehenden Ansprüche, dadurch gekennzeichnet, daß die Drosselbüchse (48) und die Drosselschraube (50) unabhängig voneinander einstellbar sind.

8. Wegeventil nach einem der vorhergehenden Ansprüche, dadurch gekennzeichnet, daß die Drosselbüchse (48) und die Drosselschraube (50) in ihrer jeweiligen Stelle verrastbar sind.

## Revendications

1. Soupape à voies multiples, destinés surtout à l'excitation électropneumatique, avec un boîtier (14) possédant un raccord d'entrée (16), deux raccords de travail (18, 20) et un raccord de désaération (22) ainsi qu'un piston de commande (24), l'un des raccords de travail (20) pouvant être relié directement, et l'autre raccord de travail (18) moyennant des perçages (62, 64) du piston de commande (24), au raccord de désaération (22), le piston de commande (24) étant conçu comme soupape à tiroir (26), caractérisé par le fait que le piston de commande (24) est conçu comme soupape à siège (28) dans la zone de l'autre raccord de travail (20), de sorte qu'en cas de soupape à siège (28) ouverte une partie de sa section (54) est fermée par une saillie (66) du piston de commande (24) tandis que le reste (76) de la section de la soupape (54) peut être modifié à l'aide d'une douille d'étranglement (48), et que, moyennant la douille d'étranglement (48) et une vis d'étranglement (50), l'ouverture de sortie frontale de l'alésage (64) peut être modifiée.

2. Soupape à voies multiples d'après la revendication 1, caractérisée par le fait que l'un des raccords de travail (20) peut être aéré à travers le siège (42) de la soupape à siège ouverte (28).

3. Soupape à voies multiples d'après la revendication 1 ou 2, caractérisée par le fait que la saillie cylindrique (66) du piston de commande (24) s'étend de façon continue à travers le siège (42) de la soupape à siège (28).

4. Soupape à voies multiples d'après la revendication 1, caractérisée par le fait que la partie restante (76) de la section (54) du siège de soupape (42) est conçue de façon semi-circulaire et que la douille d'étranglement (48) a un collet semi-circulaire correspondant (56) qui permet, en tournant la douille d'étranglement (48), de recouvrir et d'étrangler cette section semi-circulaire restante (76) de la section de soupape (54).

5. Soupape à voies multiples d'après la revendication 1, caractérisée par le fait que la douille d'étranglement (48) et la vis d'étranglement (50) possèdent chacune un collet semi-circulaire axial (58 ou 60, respectivement), et que la vis d'étranglement (50) peut être tournée relativement par rapport à la douille d'étranglement (48) de sorte à pouvoir renfermer et étrangler l'ouverture de sortie du perçage longitudinal (64) dans le sens circonférentiel.

6. Soupape à voies multiples d'après la revendication 5, caractérisée par le fait que la vis d'éran- glement (50) est maintenue de façon centrique dans la douille d'étranglement (48) et que les deux collets semi-circulaires (58, 60) de l'ouverture de sortie sont axialement opposés au perçage longitudinal (48).

7. Soupape à voies multiples d'après une des revendications précédentes, caractérisée par le fait que la douille d'étranglement (48) et la vis d'étranglement (50) peuvent être réglées indépendamment l'une de l'autre.

8. Soupape à voies multiples d'après une des revendications précédentes, caractérisée par le fait que la douille d'étranglement (48) et la vis d'étranglement (50) peuvent prendre l'encoche dans leur position respective.

**Claims**

1. Multiway valve, in particular for electropneumatic control, with a housing (14) with a supply connection (16), two working connections (18, 20) and a venting connection (22), as well as a control piston (24), where the one working connection (20) can be directly connected with the venting connection (22) and the other working connection (18) through borings (62, 64) in the control piston (24), where the control piston (24) is designed in the area of the one working connection (18) as slide valve (26), thereby characterized that the control piston in the area of the other working connection (20) is designed as seat valve (28), that when the seat valve (28) is open a part of its valve cross section (54) is closed by a projection (66) of ths control piston (24), while the remaining part (76) of the valve cross section (54) can be altered by means of a rotary throttle bush (48), and that the front end outlet opening of the boring (64) can be changed by the throttle bush (48) and a throttle screw (50).

2. Multiway valve according to Claim 1, thereby characterized, that the one working connection (20) can be vented throughout through the valve seat (42) of the opened seat valve (28).

3. Multiway valve according to Claim 1 or 2, thereby characterized, that the cylinder projection (66) of the control piston (24) constantly extends through the valve seat (42) of the seat valve (28) throughout.

4. Multiway valve according to Claim 1, thereby characterized that the remaining part (76) of the valve cross section (54) of the valve seat (42) is designed semiannularly and that the throttle bush (48) has a corresponding semiannular flange (56), through which this semiannular remaining cross section (76) of the valve cross section (54) can be covered and throttled when the throttle bush (48) is turned.

5. Multiway valve according to Claim 1, thereby characterized that the throttle bush (48) and the throttle screw (50) each have an axial semiannular flange (58 and 60 respectively), and that the throttle screw (50) can be turned relative to the throttle bush (48), so that the outlet opening of the longitudinal boring (64) can be enclosed and throttled in peripheral direction.

6. Multiway valve according to Claim 5, thereby characterized that the throttle screw (50) is held concentrically in the throttle bush (48) and that the two semiannular flanges (58, 60) of the outlet opening of the longitudinal boring (64) lie axially opposite to each other.

7. Multiway valve according to one of the preceding claims, thereby characterized that the throttle bush (48) and the throttle screw (50) can be adjusted independently of each other.

8. Multiway valve according to one of the preceding claims, thereby characterized that the throttle bush (48) and the throttle screw (50) can be located in their respective position.

Fig. 1

# Fig. 2

## Fig. 3

## Fig. 4

# Fig. 5

# Fig. 6

4